Europäisches Patentamt

European Patent Office

Office européen des brevets

(19)

(11) Numéro de publication : **0 100 701**
**B1**

## (12) FASCICULE DE BREVET EUROPÉEN

(45) Date de publication du fascicule du brevet :
**17.08.88**

(21) Numéro de dépôt : **83401348.4**

(22) Date de dépôt : **30.06.83**

(51) Int. Cl.⁴ : **E 06 B  5/20**, E 06 B  3/66

(54) **Vitrage multiple à propriétés d'isolation thermique et acoustique.**

(30) Priorité : **05.07.82 FR 8211779**

(43) Date de publication de la demande :
**15.02.84 Bulletin 84/07**

(45) Mention de la délivrance du brevet :
**17.08.88 Bulletin 88/33**

(84) Etats contractants désignés :
**AT BE CH DE FR GB IT LI LU NL SE**

(56) Documents cités :
**FR-A- 2 148 484**
**FR-A- 2 259 068**
**FR-A- 2 294 314**
**FR-A- 2 464 139**

(73) Titulaire : **SAINT-GOBAIN VITRAGE**
**Les Miroirs 18, avenue d'Alsace**
**F-92400 Courbevoie (FR)**

(72) Inventeur : **Rehfeld, Marc**
**23 rue des Lévriers**
**F-95360 Montmagny (FR)**

(74) Mandataire : **Leconte, Jean-Gérard et al**
**Saint-Gobain Recherche 39, Quai Lucien Lefranc**
**F-93304 Aubervilliers Cedex (FR)**

Jouve, 18, rue St-Denis, 75001 Paris, France

# 0 100 701

## Description

La présente invention concerne un vitrage multiple à propriétés d'isolation thermique et acoutisque améliorées.

On a déjà proposé dans la technique de très nombreux types de vitrages, simples, feuilletés et multiples, en vue de répondre à certaines exigences d'isolation thermique ou d'insonorisation.

C'est ainsi que, dans la demande de brevet FR 7 711 228 (FR-A-2 387 348), la société SAINT-GOBAIN INDUSTRIES a proposé une fenêtre acoustique présentant aux essais de laboratoire un indice d'affaiblissement acoustique compris entre 34 et 38 dB(A) vis-à-vis du trafic routier, cette fenêtre comportant un vitrage simple ou multiple ayant une masse surfacique inférieure ou égale à 40 kg/m$^2$ et une épaisseur inférieure ou égale à 30 mm, qui présente un indice d'affaiblissement acoustique propre compris entre 31 et 36 dB (A).

En étudiant de tels vitrages, la demanderesse a constaté que leurs performances acoustiques ou thermiques sont liées à des caractéristiques constructives très différentes et que, si l'on essaie de réaliser par les techniques connues un vitrage qui soit simultanément insonorisant et thermiquement isolant, on est amené à lui donner des épaisseurs très importantes, non compatibles avec les feuillures des châssis usuels, si bien qu'il s'avère plus économique d'utiliser des doubles fenêtres pour obtenir le résultat désiré.

C'est ainsi également que le brevet français 2 259 068 propose des vitrages acoustiques comportant des feuilletés de verre et de matières plastiques, les matières plastiques étant sélectionnées pour que la fréquence critique d'un feuilleté soit comprise entre 0,70 % et 0,97 % de la fréquence critique d'un verre monolithique ayant l'épaisseur de la totalité du feuilleté. Selon ce critère de choix, le polyvinylbutyral (PVB) constitue un intercalaire qui confère aux feuilletés et aux vitrages acoustiques qui les comportent, des caractéristiques acoustiques intéressantes.

La demanderesse a cependant constaté que les vitrages dans lesquels le PVB intervenait comme intercalaire, ne possédaient que des caractéristiques acoustiques médiocres.

Elle a établi qu'en utilisant une résine répondant à des conditions originales, différentes de celles proposées dans le brevet FR 2 259 068 précité, pour réunir les feuilles d'un feuilleté de verre, ce dernier présente des qualités d'amortissement des sons audibles particulièrement satisfaisantes, bien supérieures à celles obtenues jusqu'alors, et qu'en combinant un tel feuilleté avec un verre simple ou un second verre feuilleté et en respectant certaines conditions dimensionnelles, il est possible de réaliser un vitrage multiple pésentant à la fois des caractéristiques excellentes d'isolation thermique et d'insonorisation.

Un but de l'invention est donc de réaliser un vitrage multiple présentant de telles propriétés et dont l'épaisseur soit compatible avec les feuillures des châssis usuels.

Un autre but de l'invention est de proposer un tel vitrage qui puisse être fabriqué par des techniques classiques et qui soit donc d'un prix compétitif avec les vitrages multiples existants.

L'invention vise enfin à proposer un vitrage multiple présentant un indice propre d'affaiblissement acoustique, selon la norme NF S 31-051, d'au moins 38 dB (A) pour un bruit de trafic routier, et pouvant atteindre 42 dB (A) pour certaines formes de réalisation.

A cet effet, l'invention a pour objet un vitrage multiple comprenant une première plaque de verre feuilleté et une seconde plaque de verre simple ou feuilleté parallèle à la première plaque et séparée de celle-ci par une lame de gaz, les deux plaques étant assemblées entre elles de façon étanche aux gaz par des moyens connus dans la technique, ce vitrage multiple étant caractérisé en ce que la première plaque de verre feuilleté comprend deux feuilles de verre simple d'épaisseur respective comprise entre 3 et 8 mm, réunies par une couche de résine d'épaisseur au plus égale à 10 mm et, de préférence, comprise entre 0,3 et 3 mm, en ce que la lame de gaz a une épaisseur comprise entre 6 et 30 mm et, de préférence, entre 6 et 20 mm, en ce que la seconde plaque a une épaisseur supérieure à 8 mm et, de préférence, de l'ordre de 10 mm, dans le cas d'un verre simple, ou est en un verre feuilleté répondant aux mêmes critères d'épaisseur que le verre feuilleté de la première plaque, et en ce que la résine du verre feuilleté de la première plaque est choisie telle qu'un barreau de 9 cm de longueur et de 3 cm de largeur, constitué d'un verre feuilleté comprenant deux feuilles de verre de 4 mm d'épaisseur réunies par une couche de 2 mm de cette résine, ait une fréquence critique qui diffère au plus de 35 % de celle d'un barreau de verre ayant la même longueur, la même largeur et 4 mm d'épaisseur.

Le choix de la résine du verre feuilleté constitue un critère essentiel d'isolation phonique du vitrage multiple conforme à l'invention. On rappellera, dans la suite de la présente description, la méthode de détermination de la fréquence critique permettant de choisir cette résine. Parmi les résines susceptibles d'être utilisées, on mentionnera le mélange d'un composant polyol plurifonctionnel et d'un composant isocyanate plurifonctionnel, le composant polyol étant présent en large excès, le rapport numérique des groupes isocyanates à celui des groupes hydroxyles étant compris entre 0,2 et 0,6 et, de préférence, entre 0,25 et 0,45, comme décrit la publication de brevet français FR 2 464 139 de la société SAINT-GOBAIN INDUSTRIES, cette résine étant appelée dans la suite résine polyol à groupes ployuréthanes ; on mentionnera également les résines à base de méthacrylate, les résines à base de chlorure de polyvinyl (PVC).

De façon surprenante, en revanche, des résines utilisées de façon usuelles comme couche

2

intercalaire dans les verres feuilletés, le polyvinylbutyral par exemple, ne remplissent pas la condition de la fréquence critique énoncée ci-dessus et ne peuvent donc être utilisées dans le cadre de l'invention.

Les vitrages multiples conformes à l'invention présentent un excellent indice d'affaiblissement acoustique vis-à-vis du trafic routier, puisqu'il est au moins égal à 38 dB (A), suivant les normes NF S 31-051 et NF S 31-045.

Ainsi qu'il a été indiqué ci-dessus, l'épaisseur des feuilles de verre de la première plaque en verre feuilleté sera au plus de 6 mm, d'une part, pour limiter le poids de l'ensemble, mais surtout parce que des épaisseurs supérieures entraîneraient un affaiblissement des caractéristiques acoustiques dans les fréquences médiums, en raison d'une fréquence de coïncidence trop basse des verres.

Le choix entre un verre simple et un verre multiple pour la deuxième plaque de verre devra tenir compte des caractéristiques acoustiques de la fenêtre que doit équiper le vitrage. En effet, le verre simple conférera au vitrage multiple un moindre affaiblissement acoustique qu'un verre feuilleté, dans les fréquences médiums et aiguës, mais, si cet affaiblissement reste supérieur à celui de la fenêtre proprement dite pour les mêmes fréquences, on utilisera avantageusement un tel verre simple. On devra tenir du fait que, si l'épaisseur de celui-ci est faible, ses caractéristiques acoustiques seront médiocres dans les fréquences graves et que, si cette épaisseur est trop forte, c'est dans les fréquences médiums que les résultats obtenus laisseront à désirer. De façon générale, l'épaisseur optimum de la plaque de verre simple sera de l'ordre de 10 mm.

On constate donc que la gamme des épaisseurs énoncées ci-dessus est tout à fait compatible avec les dimensions des châssis usuels de fenêtre, de sorte que la pose du vitrage multiple conforme à l'invention ne pose aucun problème aux utilisateurs.

Naturellement, les châssis devront être tels qu'eux-mêmes aient d'excellentes performances thermiques et acoustiques, notamment pour les fréquences médiums et aiguës. On pourra utiliser, par exemple, du bois dense (masse spécifique égale ou supérieure à 0,8, épaisseur au moins égale à 54 mm) ou des profilés en polychlorure de vinyle emplis de résine. Pour ce qui est des fenêtres, on utilisera de préférence des fenêtres à deux vantaux le label ACOTHERM.

Les performances d'isolation thermique du vitrage conforme à l'invention sont comparables à celles des vitrages multiples qui comprennent au moins deux glaces séparées par un volume de gaz (généralement de l'air sec ou de l'hexafluorure de soufre).

Les dessins annexés illustrent l'invention. Sur ces dessins :

Les figures 1 à 4 sont des coupes transversales de quatre formes de mise en oeuvre de l'invention ;

La figure 5 est un schéma de l'appareillage utilisé pour mesurer la fréquence critique d'un barreau de verre ;

Les figures 6 et 7 illustrent les courbes obtenues avec cet appareillage pour un barreau de verre et pour un barreau de verre feuilleté comprenant une couche de résine susceptible d'être utilisée dans le cadre de l'invention.

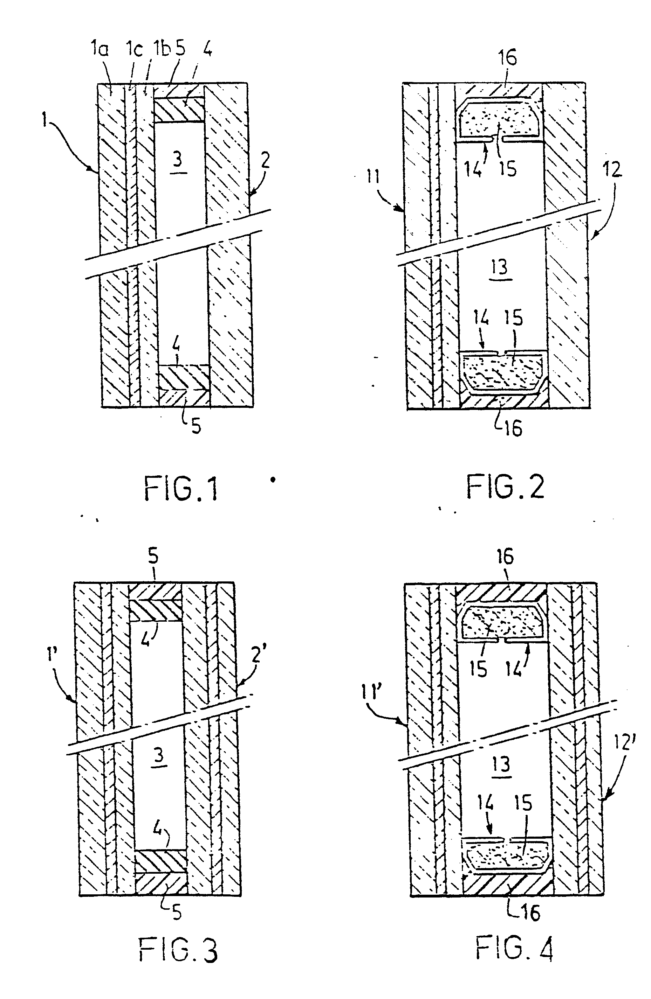

Le vitrage multiple représenté sur la figure 1 comprend une plaque 1 de verre feuilleté et une plaque 2 de verre simple, séparées par une lame d'air sec 3 et assemblées de façon étanche au gaz, de manière connue en soi, par deux cordons de matière adhésive formant joints, le joint interne 4 étant par exemple constitué de caoutchouc butyl et de polyisobutylène, avec un desséchant incorporé, tandis que le joint externe 5 est en polysulfure.

Ce mode d'assemblage des feuilles de verre avec deux types de cordon est décrit dans la demande FR 7 440 827 (FR-A-2 294 314).

Le vitrage feuilleté 1 est du type dit 6(2)4, c'est-à-dire qu'il comprend une feuille de verre 1a de 6 mm d'épaisseur, une feuille de verre 1b de 4 mm d'épaisseur et une couche de résine 1c de 2 mm d'épaisseur, cette résine ayant été choisie selon les critères qui seront décrits ci-après. Dans le cas présent, il s'agit d'une résine commercialisée sous l'appelation DEGALAN VP 700, qui est une résine à base de méthacrylate.

La feuille de verre 2 a une épaisseur de 10 mm et la lame d'air sec 3 une épaisseur de 12 mm.

Ce vitrage, testé suivant la norme NF S 31-051, présente un indice d'affaiblissement acoustique de 38 dB (A) pour un bruit de trafic routier. Il présente un indice de qualité de 43 dB, selon la norme ISO 717.

L'espace de 12 mm entre la plaque 1 de verre feuilleté et la plaque de verre simple peut être empli d'hexafluorure de soufre ($SF_6$). Cela confère au vitrage des propriétés acoustiques un peu améliorées ; ainsi l'indice de qualité suivant la norme ISO 717 est porté à 45 dB. Une fenêtre ayant elle-même d'excellentes performances acoustiques, notamment une fenêtre en bois dense de 54 mm d'épaisseur, ou en profilés de polychlorure de vinyle, de préférence à plusieurs chambres emplies de résine, équipée d'un tel vitrage à lame d'air ou à lame de gaz $SF_6$, présente un indice d'affaiblissement acoustique au bruit du trafic routier de 40 dB (A) suivant la norme NF S 31-051.

Le vitrage multiple représenté sur la figure 2 comprend à nouveau une plaque 11 de verre feuilleté du type 6(2)4, identique à la plaque 1 du vitrage de la figure 1, et une plaque 12 de verre simple, identique à la plaque 2 de la figure 1. La lame d'air 13 séparant les plaques 11 et 12 a toutefois une épaisseur de 20 mm et les plaques sont maintenues écartées par des intercalaires rigides internes 14, par exemple en aluminium, remplis d'un produit desséchant 15, les plaques étant assemblées par un cordon externe 16 d'une résine étanche au gaz, par exemple de polysulfure ou de caoutchouc butyle.

Ce mode de montage et d'assemblage des feuilles de verre avec des intercalaires rigides est préféré

3

lorsque la lame de gaz séparant les feuilles de verre a une épaisseur importante, comme dans le cas présent (20 mm).

Ce vitrage présente un indice d'affaiblissement acoustique vis-à-vis du trafic routier de 39 dB (A), selon la norme NF S 31-051, et un indice de qualité de 44 dB selon la norme ISO 717.

L'espace de 20 mm d'épaisseur séparant la plaque 11 de verre feuilleté et le verre simple 12 peut être rempli d'un gaz autre que l'air, par exemple avec $SF_6$. Dans ce cas, l'indice d'affaiblissement acoustique selon la norme NF S 31-051 est de 42 dB (A) et l'indice de qualité selon la norme ISO 717 est de 47 dB. Lorsque ces vitrages sont montés dans un fenêtre à bonnes performances acoustiques, on atteint pour l'ensemble ainsi constitué un indice d'affaiblissement acoustique suivant la norme NF S 31-051 de l'ordre de 41 dB (A). Ces vitrages peuvent également être fabriqués avec la résine polyol à groupes polyuréthanes ou la résine à base de PVC, et conduisent aux mêmes performances.

Les vitrages représentés sur les figures 3 à 4 sont identiques, respectivement, à ceux des figures 1 et 2, et les organes déjà décrits sont désignés par les mêmes chiffres de référence, la seule différence étant que les plaques de verre simple 2, respectivement 12 ont été remplacées par des plaques de verre feuilleté 2', respectivement 12', identiques aux plaques 1 et 11 et que les feuilles de verre des plaques de verre feuilleté du type 4(2)4 sont réunies par une résine polyol à groupes polyuréthanes.

Le vitrage de la figure 3 présente un coefficient d'affaiblissement acoustique de 39 dB (A) vis-à-vis du trafic routier, selon la norme NF S 31-051, et un indice de qualité de 46 dB, selon la norme ISO 717.

Le même vitrage contenant du gaz $SF_6$ à la place de l'air présente un indice d'affaiblissement acoustique selon la norme NF S 31-051 de 39 dB (A) et un indice de qualité de 48 dB selon la norme ISO 717.

Pour le vitrage de la figure 4, les mêmes indices sont respectivement égaux à 39 dB (A) et 47 dB, lorsque le gaz entre les deux plaques est de l'air, et respectivement à 42 dB (A) et 51 dB, lorsque le gaz est $SF_6$.

Les résines employées pour constituer les vitrages feuilletés peuvent être coulées in situ, ou être des résines en feuilles préfabriquées. Dans le cas de résines en feuilles, il est particulièrement aisé d'obtenir de faibles épaisseurs de résine ; pour des performances acoustiques du même ordre de grandeur, l'épaisseur de résine des feuilletés peut être réduite et être aussi basse qu'environ 0,3 mm. Une ou plusieurs feuilles accolées pourront ainsi former la couche de résine.

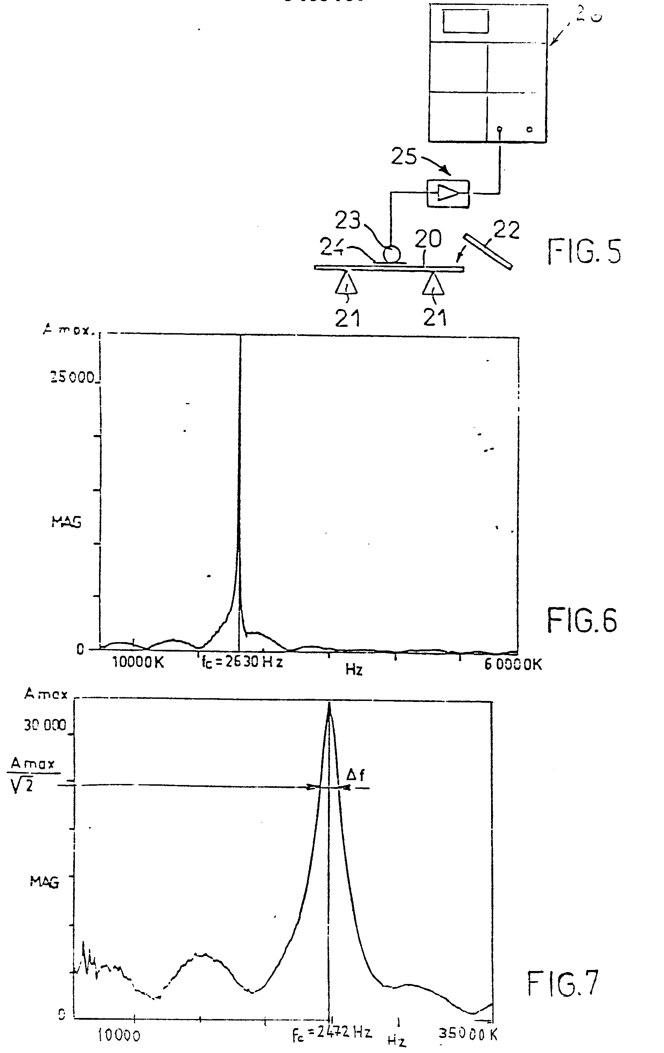

On va maintenant décrire, en référence à la figure 5, la méthode qui permet de faire le choix d'une résine utilisable dans le cadre de l'invention.

On sait que l'énergie acquise par un objet soumis à un choc engendre un phénomène de vibration et qu'aussitôt après le choc, l'objet redevenu libre vibre suivant son mode propre. A chaque mode est associée une fréquence de vibration. L'amplitude de la vibration dépend de l'excitation initiale, c'est-à-dire de la composante spectrale du choc (amplitude du choc à la fréquence étudiée) et de la zone d'impact du choc, la déformation modale étant plus ou moins importante selon que le choc se produit à un ventre ou à un noeud de vibration.

Pour qu'un mode propre soit excité, il faut :

(1) que la déformation provoquée au point d'impact ne se situe pas sur un noeud de vibration du mode,

(2) que le spectre d'énergie de choc ait une composante à la fréquence de résonance du mode.

Cette dernière condition est pratiquement toujours remplie, car un choc très bref présente un spectre d'énergie pratiquement uniforme.

La première condition est également remplie et, pour un barreau libre à ses extrémités, par exemple, il suffit de taper à l'une des extrémités pour exciter tous les modes.

En réalité, on n'arrive à «mesurer» que les dix premiers modes, au maximum. L'énergie vibratoire acquise par un choc se dissipe au cours du temps et ce d'autant plus rapidement que le matériau est plus amorti.

Pour un matériau donné, les modes se dissipent d'autant plus vite que la fréquence de résonance associée est plus élevée, de sorte qu'au bout d'un certain temps, et pendant une certaine durée, seul le premier mode subsiste.

Le principe de la mesure consiste donc à effectuer l'analyse des fréquences de vibration d'un barreau soumis à un choc et à repérer la position des fréquences de résonance (fréquences pour lesquelles l'amplitude de vibration est nettement plus importante que dans le reste du spectre).

Pour effectuer la mesure (figure 5), on utilise successivement des barreaux 20 de 9 cm de longueur et de 3 cm de largeur, d'abord en un verre de 4 mm d'épaisseur, puis en un verre feuilleté 4(2)4, dans lequel des feuilles de verre de 4 mm d'épaisseur sont assemblées par une couche de 2 mm d'épaisseur de la résine à tester.

Le barreau 20 repose sur deux supports de mousse 21, placés sensiblement au noeuds de vibration du premier mode (mode fondamental) de flexion dynamique du barreau. Celui-ci est excité par un choc exercé en frappant l'une de ses extrémités libres par un petit objet 22, tel qu'une règle.

La réponse transitoire du barreau à cette excitation est recueillie par un microphone 23, disposé sur un support 24, très près de la surface du barreau 20, au milieu de celui-ci (ventre de pression). Le signal temporel recueilli par le microphone 23 est amplifié par l'amplificateur 25, puis analysé en fréquence par un analyseur Fourier 26.

On procède en général à une dizaine d'essais pour un même barreau 20, afin de réduire l'influence des bruits extérieurs.

Comme on le voit sur les figures 6 et 7, les courbes obtenues, qui représentent l'amplitude A des vibrations en fonction de la fréquence de celles-ci respectivement pour un barreau de verre et pour un barreau de verre feuilleté comprenant une résine à tester dans le cadre de la présente invention, permettent de déceler avec précision la fréquence de résonance du mode fondamental de vibration de flexion (fréquence critique). Dans les exemples représentés, la fréquence critique du barreau de verre est de 2630 Hz, tandis que celle du barreau de verre feuilleté est de 2472 Hz. Cette fréquence diffère de moins de 10 % de celle du verre et donc de moins de 35 %, et la résine testée peut être utilisée, par conséquent, pour réaliser des verres feuilletés entrant dans la constitution du vitrage multiple selon l'invention.

Le test qui vient d'être décrit et qui est d'une grande simplicité de mise en oeuvre permet également de déterminer l'amortissement à la flexion V du barreau 20, que l'on définit comme le rapport $\Delta f/f_c$, ou $\Delta f$ représente la différence des fréquences correspondant à une amplitude égale à celle de la fréquence critique $f_c$, divisée par $\sqrt{2}$.

De façon surprenante l'amortissement V à la flexion ne peut pas être retenu comme critère de détermination des résines utilisables dans le cadre de la présente invention.

C'est ainsi que, pour cinq résines A, B, C, D et E respectivement du type polyol à groupes polyuréthanes, méthacrylate (VP 700), résine à base de PVC (ALG film de SEKISUI), résine acrylique employée pour la fabrication du vitrage commercialisée sous l'appellation «CASOGLAS», et polyvinylbutyral, les mesures de la fréquence critique $f_c$ et de l'amortissement à la flexion V, effectuées sur divers barreaux de verre feuilleté, ont donné les résultats suivants :

| ECHANTILLON | RESINE | | | | | | | | | |
|---|---|---|---|---|---|---|---|---|---|---|
| | A | | B | | C | | D | | E | |
| | $f_c$ | V | $f_c$ | V | $f_c$ | V | $f_c$ | V | $f_c$ | V |
| 1 | 2528 | 5 | 2533 | 8,1 | 3485 | 21,3 | – | – | 4580 | 11,6 |
| 2 | 2461 | 5,1 | 2521 | 7,6 | 3465 | 20,4 | 3890 | 11,5 | 4410 | 12,3 |
| 3 | 2441 | 5,1 | 2508 | 5,6 | 3428 | 21,3 | – | – | 4394 | 11,9 |

Un barreau de verre testé dans les mêmes conditions présente les caractéristiques suivantes :

$$f_c = 2629 \text{ Hz} \qquad V = 1 \%$$

On constate que, pour les verres feuilletés réalisés avec les résines A, B et C la fréquence critique $f_c$ diffère de moins de 35 % de celle du verre, de sorte que ces verres feuilletés peuvent être utilisés pour réaliser un vitrage conforme à l'invention, alors que ce n'est pas le cas pour les verres feuilletés réalisés avec les résines D et E. Au contraire, les amortissements V obtenus pour les verres feuilletés réalisés avec les résines D et E sont plus élevés, donc meilleurs, que ceux correspondant aux résines A et B. On aurait donc pu s'attendre à ce que les verres feuilletés réalisés avec les résines D et E conduisent à de bons résultats dans leur application au vitrage conforme à l'invention, ce qui n'est pas le cas.

L'amortissement à la flexion ne constitue donc pas un critère fiable pour la détermination des résines susceptibles d'être utilisées dans le cadre de l'invention.

**0 100 701**

**Revendications**

1. Vitrage multiple comprenant une première plaque (1, 11, 1', 11') de verre feuilleté et une seconde plaque (2, 12, 2', 12'), de verre simple ou feuilleté, parallèle à la première plaque et séparée de celle-ci par une lame de gaz (3, 13), les deux plaques étant assemblées entre elles de façon étanche aux gaz par des moyens (4,5,14,15,16) connus dans la technique, ce vitrage multiple étant caractérisé en ce que la première plaque de verre feuilleté (1,1',11,11') comprend deux feuilles de verre simple (1a, 1b) d'épaisseur respective comprise entre 3 et 8 mm, réunies par une couche de résine (1c) d'épaisseur au plus égale à 10 mm et, de préférence, comprise entre 0,3 et 3 mm, en ce que la lame de gaz (3, 13) a une épaisseur comprise entre 6 et 30 mm et, de préférence, entre 6 et 20 mm, en ce que la seconde plaque (2, 2', 12, 12') a une épaisseur supérieure à 8 mm et, de préférence de l'ordre de 10 mm, dans le cas d'un verre simple, ou est en un verre feuilleté répondant aux mêmes critères d'épaisseur que le verre feuilleté de la première plaque, et en ce que la résine du verre feuilleté de la première plaque est choisie telle qu'un barreau de 9 cm de longueur et de 3 cm de largeur, constitué d'un verre feuilleté comprenant deux feuilles de verre de 4 mm d'épaisseur réunies par une couche de 2 mm de cette résine, ait une fréquence critique qui diffère au plus de 35 % de celle d'un barreau de verre ayant la même longueur, la même largeur et 4 mm d'épaisseur.

2. Vitrage multiple selon la revendication 1, caractérisé en ce que la résine du verre feuilleté est une résine à base de méthacrylate, une résine à base de PVC, une résine à base d'un composant polyol plurifonctionnel et d'un composant isocyanate plurifonctionnel, le composant polyol étant pris en large excès, le rapport numérique des groupes isocyanates à celui des groupes hydroxyles étant compris entre 0,2 et 0,6 et, de préférence, entre 0,25 et 0,45.

3. Vitrage multiple selon l'une des revendications 1 et 2, caractérisé en ce que, de façon connue en soi, la première plaque de verre feuilleté (1,1') et la seconde plaque (2,2') de verre simple ou de verre feuilleté sont assemblées de façon étanche au gaz par deux cordons (4, 5) de matière plastique.

4. Vitrage selon l'une des revendications 1 et 2, caractérisé en ce que, de façon connue en soi, la première plaque de verre feuilleté (11, 11') et la seconde plaque (12, 12') de verre simple ou de verre feuilleté sont séparées par des intercalaires rigides (14) et assemblées ensemble de façon étanche aux gaz par au moins un cordon de matière plastique.

5. Vitrage acoustique comprenant au moins un vitrage feuilleté (1, 1', 11, 11'), caractérisé en ce que la résine du vitrage feuilleté est telle qu'un barreau de 9 cm de longueur et de 3 cm de largeur constitué d'un verre feuilleté comprenant deux feuilles de verre de 4 mm d'épaisseur réunies par une couche de 2 mm de cette résine, ait une fréquence critique qui diffère au plus de 35 % de celle d'un barreau de verre ayant la même longueur, la même largeur de 4 mm d'épaisseur.

6. Vitrage selon l'une des revendications 1 à 5, caractérisé en ce que la résine est une résine en feuilles préfabriquées, la couche de résine employée comprenant une ou plusieurs feuilles accolées.

7. Fenêtres à hautes performances acoustiques, caractérisées en ce que des chassis de fenêtres à hautes performances acoustiques sont équipées de vitrages selon les revendications 1 à 6 précédentes.

**Claims**

1. Multiple pane comprising a first plate (1, 11, 1', 11') of laminated glass and a second plate (2, 12, 2', 12'), of simple glass or laminated glass, parallel to the first plate and separated from the latter by a layer of gas (3, 13), the two glass plates being assembled to each other in a gas-tight manner by means (4, 5, 14, 15, 16) known in the art, this multiple pane being characterized in that the first plate of laminated glass (1, 1', 11, 11') comprises two simple sheets of glass (1a, 1b) of respective thickness from 3 mm to 8 mm, connected by a layer of resin (1c) of thickness not exceeding 10 mm and preferably from 0.3 to 3 mm, in that the layer of gas (3,13) has a thickness from 6 to 30 mm and preferably 6 to 20 mm, in that the second plate (2, 2', 12, 12') has a thickness greater than 8 mm, preferably to the order of 10 mm, in the case of a simple sheet of glass, or is a laminated glass conforming to the same criteria of thickness as the laminated glass of the first plate, and in that the resin of the laminated glass of the first plate is chosen such that a bar of 9 cm length and 3 cm width, formed of a laminated glass comprising two glass sheets of 4 mm thickness joined by a layer of resin 2 mm thick has a critical frequency which differs by no more than 35 % from that of a bar of glass having the same length, the same width and a thickness of 4 mm.

2. Multiple pane according to claim 1, characterized in that the resin of the laminated glass is a resin based on methacrylate, a resin based on PVC, or a resin based on a polyfunctional polyol component and polyfunctional isocyanate component, the polyol component being present in large excess, the numerical ratio of isocyanate groups to hydroxyl groups being from 0.2 to 0.6 and preferably from 0.25 to 0.45.

3. Multiple pane according to one of claims 1 and 2, characterized in that, in known manner, the first plate of laminated glass (1, 1') and the second plate (2, 2') of simple glass or laminated glass are assembled together in gas-tight manner by two strips (4, 5) of plastics material.

4. Pane according to one of claims 1 and 2, characterized in that in known manner the first plate of laminated glass (11, 11') and the second plate (12, 12') of simple glass or laminated glass are separated by rigid spacers (14) and assembled together in gas-tight manner by at least one strip of plastics material.

6

5. Acoustic pane comprising at least one laminated pane (1, 1′, 11, 11′), characterized in that the resin of the laminated pane is such that a bar 9 cm long and 3 cm wide formed of a laminated glass comprising two glass sheets of 4 mm thickness joined by a 2 mm layer of the resin has a critical frequency which differs by no more than 35 % from that of a glass bar having the same length, the same width and a thickness of 4 mm.

6. Pane according to any one of claims 1 to 5, characterized in that the resin is in the form of prefabricated sheets, the resin layer employed comprising one or more sheets joined together.

7. Windows having high acoustic performances, characterized in that window chassis of high acoustic performance are provided with panes according to one of preceding claims 1-6.

**Patentansprüche**

1. Mehrfach-Verglasung mit einer ersten Scheibe (1, 11, 1′, 11′) aus Verbundglas und einer zweiten Scheibe (2, 12, 2′, 12′) aus einfachem oder Verbundglas, die parallel zur ersten Scheibe liegt und von dieser durch einen Gasspalt (3,13) getrennt ist, wobei die beiden Scheiben gasdicht mit in der Technik bekannten Mitteln (4, 5, 14; 15, 16) miteinander verbunden sind, dadurch gekennzeichnet daß die erste Scheibe aus Verbundglas (1, 11, 1′, 11′) zwei Scheiben aus einfachem Glas (1a, 1b) mit einer jeweiligen Dicke zwischen 3 und 8 mm umfaßt, die durch eine Harzschicht (1c) mit einer Dicke von höchstens 10 mm und vorzugsweise 0,3 bis 3 mm verbunden sind, der Gasspalt (3, 13) eine Dicke zwischen 6 und 30 mm und vorzugsweise zwischen 6 und 20 mm umfaßt, die zweite Scheibe (2, 2′, 12, 12′) im Falle einfachen Glases eine Dicke von mehr als 8 mm und vorzugsweise eine in der Größenordnung von 10 mm aufweist oder ein Verbundglas mit den gleichen Dickekriterien wie das Verbundglas der ersten Scheibe ist und das Harz des Verbundglases der ersten Scheibe derart ausgewählt ist, daß ein Stab von 9 cm Länge und 3 cm Breite, der von einem Verbundglas gebildet ist, das zwei Glasscheiben von 4 mm Dicke umfaßt, die durch eine 2 mm dicke Schicht dieses Harzes verbunden sind, eine kristische Frequenz aufweist, die sich um höchstens 35 % von der eines Glasstabes gleicher Länge, gleicher Breite und von 4 mm Dicke unterscheidet.

2. Mehrfach-Verglasung nach Anspruch 1, dadurch gekennzeichnet, daß das Harz des Verbundglases ein Harz auf der Grundlage von Methacrylat, der Grundlage von PVC oder der Grundlage einer polyfunktionellen Polyolverbindung und einer polyfunktionellen Isocyanatverbindung ist, wobei die Polyolverbindung in großem Überschuß eingesetzt ist, das zahlenmäßige Verhältnis der Isocyanatgruppen zu den Hydroxylgruppen zwischen 0,2 und 0,6 und vorzugsweise zwischen 0,25 und 0,45 liegt.

3. Mehrfach-Verglasung nach einem der Ansprüche 1 und 2, dadurch gekennzeichnet, daß die erste Scheibe aus Verbundglas (1, 1′) und die zweite Scheibe (2, 2′) aus einfachem oder Verbundglas in an sich bekannter Weise durch zwei Bänder (4, 5) aus Kunststoff gasdicht verbunden sind.

4. Mehrfach-Verglasung nach einem der Ansprüche 1 und 2, dadurch gekennzeichnet, daß die erste Scheibe (11, 11′) aus Verbundglas und die zweite Scheibe aus einfachem oder Verdundglas (12, 12′) in an sich bekannter Weise durch starre Zwischenlagen (14) getrennt und durch mindestens ein Band Kunststoff gasdicht miteinander verbunden sind.

5. Akustische Verglasung mit mindestens einer Verbundverglasung (1, 1′, 11, 11′), dadurch gekennzeichnet, daß das Harz der Verbundverglasung ein derartiges ist, daß ein Stab von 9 cm Länge und 3 cm Breite, der von einem Verbundglas gebildet ist, das zwei Glasscheiben von 4 mm Dicke umfaßt, die durch eine 2 mm dicke Schicht dieses Harzes verbunden sind, eine Kritische Frequenz aufweist, die sich um höchstens 35 % von der eines Glasstabes gleicher Länge, gleicher Breite und von 4 mm Dicke unterscheidet.

6. Verglasung nach einem der Ansprüche 1 bis 5, dadurch gekennzeichnet, daß das Harz ein vorfabriziertes folienförmiges Harz ist, wobei die verwendete Harzschicht eine oder mehrere zusammengesetzte Folien umfaßt.

7. Fenster hoher akustischer Leistungsfähigkeit, dadurch gekennzeichnet, daß Rahmen von Fenstern hoher akustischer Leistungsfähigkeit mit Verglasungen nach den vorhergehenden Ansprüchen 1 bis 6 ausgerüstet sind.

FIG.1

FIG.2

FIG.3

FIG. 4

FIG. 5

FIG. 6

$f_c = 2630\,Hz$

FIG. 7

$f_c = 2472\,Hz$